# EUROPÄISCHE PATENTSCHRIFT

(11) **EP 2 746 640 B1**
(45) Veröffentlichungstag und Bekanntmachung des Hinweises auf die Patenterteilung: **18.07.2018**
(21) Anmeldenummer: 13198105.2
(22) Anmeldetag: 18.12.2013
(51) Int. Cl.: F16M 11/04, F16M 11/18, F16M 11/20

(54) **Teleskopsäule und Arbeitsplatzsystem**
Telescopic column and workplace system
Colonne télescopique et système de poste de travail

(30) Priorität: 21.12.2012 DE 102012113001
(43) Veröffentlichungstag der Anmeldung: 25.06.2014
(73) Patentinhaber: Maurer + Partner AG, 3615 Heimenschwand (CH)
(72) Erfinder: Maurer, Ernst, 3615 Heimenschwand (CH)
(74) Vertreter: Epping - Hermann - Fischer

(56) Entgegenhaltungen:
- EP-A1- 1 591 038
- WO-A1-2009/064246
- SE-C2- 513 249
- US-A1- 2011 120 243

## Beschreibung

Die Erfindung betrifft eine Teleskopsäule zur elektrischen Höhenverstellung eines Flachbildschirms und ein höhenverstellbares Arbeitsplatzsystem mit einer solchen Teleskopsäule und mit einem Tischsystem.

Es sind verschiedene Arten von Halterungen für Flachbildschirme bekannt, bei denen der Flachbildschirm beispielsweise über eine Wandhalterung oder eine Deckenhalterung befestigt ist. Für solche Halterungen ist es jedoch notwendig, dass an der für den Bildschirm vorgesehenen Position eine Wand beziehungsweise eine Decke vorhanden ist. Zudem sind solche Halterungen bezüglich einer Veränderung der Position des Flachbildschirms unflexibel.

Aus einem anderen Bereich ist in der US 2011/0120243 A1 ein Linearaktuator für eine höhenverstellbare Säule bekannt, bei dem eine zentrale Spindel mit zwei gegenläufig darauf befestigten Spindelmuttern vorgesehen ist. Bei Drehung der zentralen Spindel bewegen sich die beiden Spindelmuttern longitudinal in entgegengesetzter Richtung.

Eine dazu funktional ähnliche Anordnung ist aus der SE 513 249 C2 bekannt, bei der in einem Linearaktuator zwei Zahnräder vorgesehen sind, über die gemeinsam eine geschlossene Kette läuft. An der Kette sind rechts und links der Zahnräder zwei Stangen starr befestigt, die sich bei Bewegung der Kette auslenken und eine longitudinale Bewegung erzeugen.

Eine zu lösende Aufgabe besteht darin, ein flexibles Konzept für die Halterung eines Flachbildschirms anzugeben.

Diese Aufgabe wird mit dem Gegenstand der unabhängigen Patentansprüche gelöst. Ausgestaltungen und Weiterbildungen sind in den abhängigen Ansprüchen gekennzeichnet.

Das flexible Konzept basiert auf der Idee, einen Flachbildschirm an einer elektrisch höhenverstellbaren Säule zu befestigen. Um insbesondere große beziehungsweise schwere Bildschirme tragen zu können, wird die Säule mit wenigstens drei zueinander beweglich gelagerten Elementen teleskopartig aufgebaut. Dies ermöglicht die gezielte Verteilung von Belastungen, beispielsweise aufgrund von durch das Gewicht des Flachbildschirms wirkende Drehmomenten beziehungsweise Kippmomenten. Wenn bei einer solchen Teleskopsäule zwei Linearantriebe verwendet werden, kann eine Höhenverstellung mit großer Auslenkung bei gleichzeitiger Beibehaltung statischer Stabilität erreicht werden.

Beispielsweise umfasst eine Teleskopsäule zur elektrischen Höhenverstellung eines Flachbildschirms gemäß dem flexiblen Konzept einen unteren Rahmen, einen oberen Rahmen, der Befestigungsmittel für einen Flachbildschirm aufweist, und ein Säulenrohr, das innerhalb des unteren Rahmens und des oberen Rahmens längsverschiebbar geführt ist. Ein erster Linearantrieb ist zwischen dem unteren Rahmen und dem Säulenrohr befestigt und eingerichtet, das Säulenrohr relativ zum unteren Rahmen insbesondere vertikal zu bewegen. Ein zweiter Linearantrieb ist zwischen dem oberen Rahmen und dem Säulenrohr befestigt und eingerichtet, den oberen Rahmen relativ zum Säulenrohr insbesondere vertikal zu bewegen.

Die Teleskopsäule ist insbesondere zum Aufstellen am Boden vorgesehen. Das Vorsehen des Säulenrohrs in einer Führung innerhalb des unteren und des oberen Rahmens erlaubt einen stabilen Aufbau der Teleskopsäule. Zudem können bei gleichbleibendem Querschnitt des Säulenrohrs der untere und der obere Rahmen gleich, insbesondere in Querschnittsbetrachtung ausgebildet werden. Damit lassen sich oberer und unterer Rahmen beispielsweise aus dem gleichen Grundmaterial und mit ähnlichen beziehungsweise gleichen Bearbeitungsschritten herstellen. Damit lässt sich eine solche Teleskopsäule effizient herstellen.

Die beiden Linearantriebe ermöglichen es, flexibel die Höhenverstellung entweder nur mit dem ersten, unteren Linearantrieb, nur dem zweiten, oberen Linearantrieb oder beiden Linearantrieben gemeinsam auszuführen. Wenn der erste und der zweite Linearantrieb gleichzeitig angesteuert werden, wird die Geschwindigkeit der Höhenverstellung ungefähr verdoppelt. Somit wird eine schnelle Einstellung der Höhe des Flachbildschirms erreicht.

Grundsätzlich ermöglicht die beschriebene Teleskopsäule eine flexible Platzierung des Flachbildschirms im Raum. Dies gilt sowohl für die erstmalige Platzierung beziehungsweise Installation der Teleskopsäule als auch für eine mögliche nachträgliche Veränderung der Position der Teleskopsäule.

In verschiedenen Ausführungsformen der Teleskopsäule ist eine maximale lineare Auslenkung des ersten, unteren Linearantriebs kleiner als eine maximale lineare Auslenkung des zweiten, oberen Linearantriebs. Dies hat zur Folge, dass bei jeweiliger maximaler Auslenkung der Linearantriebe das Säulenrohr aus dem oberen Rahmen weiter herausgefahren werden kann als aus dem unteren Rahmen. Anders ausgedrückt verbleibt im unteren Rahmen eine höhere Auflagefläche zwischen Rahmen und Säulenrohr als im oberen Rahmen. Dementsprechend wird im unteren Rahmen, der eine höhere Belastung durch Drehmomente beziehungsweise Kippmomente aufgrund des Gewichts des Flachbildschirms erfährt, ausreichend Stabilität gewährleistet. Im oberen Rahmen, bei dem weniger Momente wirken, sind bei maximaler Auslenkung auch geringere Überlagerungen zwischen Säulenrohr und oberem Rahmen möglich.

In verschiedenen Ausgestaltungen der Teleskopsäule ist ein jeweiliger Motor des ersten und des zweiten Linearantriebs an der jeweils zum Boden gerichteten Seite des ersten und des zweiten Linearantriebs angeordnet. Beispielsweise sind die Linearantriebe als spindelbasierte Antriebe ausgeführt, bei der eine rotatorische Motorbewegung in eine Längsbewegung umgesetzt wird. Dadurch, dass beide Motoren an der zum Boden gerichteten Seite angeordnet sind, wird der Aufwand für die Verkabelung der Motoren, insbesondere für den zweiten, oberen Linearantrieb vereinfacht. Dies kann insbesondere vorteilhaft genutzt werden, wenn das Säulenrohr im Inneren Mittel zur Kabelführung für Kabel des zweiten Linearantriebs aufweist, welche eingerichtet sind, einen sich verändernden Abstand zwischen dem unteren Rahmen und dem oberen Rahmen auszugleichen. Beispielsweise ist das Kabel des zweiten Linearantriebs im Inneren des Säulenrohrs spiralförmig ausgebildet, sodass das Kabel des zweiten Linearantriebs auch bei verschiedenen Längenunterschieden jeweils einen kleinstmöglichen Raum im Inneren des Säulenrohrs einnimmt. Die Ausführung der Teleskopsäule mit dem Mittel zur Kabelführung für den zweiten Linearantrieb und/oder der spiralförmigen Ausbildung des Kabels lässt sich jedoch auch einsetzen, wenn der zweite Linearantrieb nicht auf der zum Boden gerichteten Seite des zweiten Linearantriebs angeordnet ist.

In verschiedenen weiteren Ausgestaltungsformen der Teleskopsäule weist das Säulenrohr Mittel zur Kabelführung für Kabel des Flachbildschirms auf, welche wiederum eingerichtet sind, einen sich verändernden Abstand zwischen dem unteren Rahmen und dem oberen Rahmen auszugleichen. Beispielsweise sind diese Mittel als so genannte Kabelraupe ausgeführt, bei der mehrere Einzelelemente beweglich aneinandergefügt sind, ähnlich wie bei einer Kette eines Kettenfahrzeugs. Im Inneren der Kabelraupe beziehungsweise der einzelnen Elemente werden das oder die Kabel des Flachbildschirms geführt. Die Einzelelemente sind dabei so verbunden, dass sich die Elemente nur entlang einer Achse gegeneinander bewegen können, die im Wesentlichen parallel zum Boden ist. In der niedrigsten Höhenposition sind die Elemente dann raupenartig angeordnet, während sich in der höchsten Position beispielsweise eine nahezu geradlinige Form ergibt. Durch die Kabelraupe wird eine gezielte Kabelführung ermöglicht und insbesondere ein Verheddern der Kabel verhindert. Dadurch ist die Sicherheit der Teleskopsäule erhöht.

Die Teleskopsäule kann in verschiedenen Ausführungsformen unmittelbar am Boden befestigt werden. Alternativ dazu kann der untere Rahmen der Teleskopsäule auch auf einem Standsockel befestigt sein.

Beispielsweise ist hierzu ferner wenigstens eine seitliche Befestigung, vorzugsweise zwei seitliche Befestigungen vorgesehen, die am unteren Rahmen starr befestigt und starr mit dem Standsockel verbunden sind. Somit kann die Teleskopsäule auch ohne Fixierung am Boden standfest aufgestellt werden. Die seitlichen Befestigungen ermöglichen eine gute Kraftübertragung zwischen dem unteren Rahmen und dem Standsockel und tragen somit zu einer erhöhten Stabilität bei.

In besonderen Ausgestaltungsformen weist der Standsockel einen weiteren Linearantrieb zur horizontalen Verschiebung des unteren Rahmens auf. Dadurch lässt sich die Position des Flachbildschirms in horizontaler Richtung verändern. Dies ermöglicht eine noch flexiblere Nutzung der Teleskopsäule. Der Standsockel weist dazu beispielsweise einen unteren Teil mit einer schienenartigen Konstruktion sowie einen oberen Teil auf, welcher sich in der Schienenkonstruktion horizontal bewegen lässt. Die tatsächliche horizontale Bewegung wird durch den Linearantrieb ausgeführt, die zwischen dem oberen und dem unteren Teil des Standsockels befestigt ist. Der untere Rahmen ist dabei auf dem oberen Teil des Standsockels befestigt.

Eine Teleskopsäule gemäß einer der zuvor beschriebenen Ausführungsformen lässt sich einzeln stehend oder in Verbindung mit anderen Elementen verwenden.

Beispielsweise weist ein höhenverstellbares Arbeitsplatzsystem eine Teleskopsäule gemäß einer der zuvor beschriebenen Ausführungsformen sowie ein Tischsystem auf. Das Tischsystem umfasst wenigstens eine Standsäule mit einem Fußelement und einem höhenverstellbaren Teil, das einen dritten Linearantrieb aufweist. Ferner umfasst das Tischsystem eine Konsole, die starr mit dem höhenverstellbaren Teil der Standsäule verbunden und an der eine erste Arbeitsplatte befestigt ist. Ein Rückelement des Tischsystems ist starr mit der Konsole verbunden und weist ein höhenverstellbares Hubteil mit einem vierten Linearantrieb auf, der für eine Bewegung relativ zum Rückelement eingerichtet ist. Dabei ist an dem Hubteil eine zweite Arbeitsplatte befestigt. Bei einem solchen höhenverstellbaren Arbeitsplatzsystem weisen der erste Linearantrieb der Teleskopsäule und der vierte Linearantrieb des Tischsystems gleiche oder im Wesentlichen gleiche Spezifikationen auf. Ebenso weisen der zweite Linearantrieb der Teleskopsäule und der dritte Linearantrieb des Tischsystems vorzugsweise gleiche oder im Wesentlichen gleiche Spezifikationen auf.

Wenn bei dem Tischsystem über den dritten Linearantrieb die Konsole beziehungsweise die erste Arbeitsplatte höhenverstellt werden, erfolgt durch die starre Verbindung automatisch eine ebensolche Höhenverstellung des Rückelements und der damit verbundenen Teile, insbesondere des Hubteils und der zweiten Arbeitsplatte. Anders ausgedrückt kann durch den dritten Linearantrieb eine gleichzeitige Höhenverstellung der ersten und der zweiten Arbeitsplatte erfolgen. Durch den vierten Linearantrieb im Hubteil des Rückelements wird unabhängig von der ersten Arbeitsplatte nur die zweite Arbeitsplatte höhenverstellt. Somit wird ein flexibles Tischsystem erreicht.

Auf der zweiten Arbeitsplatte können beispielsweise ebenfalls Flachbildschirme aufgestellt werden, die üblicherweise jedoch kleiner sind als der Flachbildschirm, der an der Teleskopsäule befestigt ist. Bei einem solchen Arbeitsplatzsystem ist es wünschenswert, dass mit geringem Verstell- beziehungsweise Steuerungsaufwand eine einheitliche Verstellung sämtlicher Elemente erfolgt. Dadurch wird beispielsweise erreicht, dass keiner der Bildschirme aus dem Blickfeld eines Nutzers des Arbeitsplatzsystems gerät.

Durch die gleichen Spezifikationen des ersten und vierten Linearantriebs beziehungsweise des zweiten und dritten Linearantriebs ist es somit möglich, dass beispielsweise bei gleichzeitiger Ansteuerung des ersten und vierten Linearantriebs der Flachbildschirm an der Teleskopsäule im gleichen Maße höhenverstellt wird wie die zweite Arbeitsplatte. Ebenso ist es beispielsweise bei gleichzeitiger Ansteuerung des zweiten und dritten Linearantriebs möglich, den Flachbildschirm an der Teleskopsäule genauso zu verstellen, wie die gemeinsame Verstellung der ersten und zweiten Arbeitsplatte. Somit kann also bei beliebiger Verstellung der Arbeitsplatten des Tischsystems die relative Höhe des Flachbildschirms an der Teleskopsäule konstant beziehungsweise im Wesentlichen konstant gehalten werden. Dies geschieht insbesondere ohne eine aufwändige Synchronisierungssteuerung zwischen den Antrieben des Tischsystems und den Antrieben der Teleskopsäule. Die synchrone Verstellung des Bildschirms einer Teleskopsäule und der Arbeitsplatten des Tischsystems ermöglichen eine verbesserte Arbeitsplatzergonomie.

Beispielsweise bewirken die verschiedenen Ausführungsformen eines solchen Arbeitsplatzsystems der erste Linearantrieb und der vierte Linearantrieb bei Beaufschlagung mit demselben Steuersignal eine gleiche Höhenverstellung und ebenso bewirken der zweite Linearantrieb und der dritte Linearantrieb bei Beaufschlagung mit demselben Steuersignal eine gleiche Höhenverstellung.

Die gleichen beziehungsweise im Wesentlichen gleichen Spezifikationen der Linearantriebe werden beispielsweise durch Kombination einer oder mehrerer der im Folgenden beschriebenen Parameter erreicht. Beispielsweise weisen die Linearantriebe gleiche Steigleistungen auf. Dazu können die Motoren der Linearantriebe eine gleiche Antriebsdrehzahl und Spindelsteigung, oder entsprechend angepasste Varianten von Antriebsdrehzahl und Spindelsteigung aufweisen. Ferner können die Linearantriebe über gleiche Steuerungssignale angesteuert werden und/oder weisen gleiche Sensoren, beispielsweise Hallgeber zur Positionsbestimmung auf. Vorzugsweise sind die Linearantriebe auch mit der gleichen so genannten Antriebssprache steuerbar. Dadurch kann das Arbeitsplatzsystem mit weniger Aufwand betrieben werden. Zudem zeichnet sich ein solches Arbeitsplatzsysteme auch durch geringere Störanfälligkeit aus. Im Betrieb des Arbeitsplatzsystems ist ein Benutzer oder Bediener durch die gemeinsame Steuerung entlastet und kann sich somit besser auf seine eigentlichen Aufgaben konzentrieren.

Die Spezifikationsgleichheit der Linearantriebe kann beispielsweise insbesondere dadurch erreicht werden, dass der erste Linearantrieb und der vierte Linearantrieb baugleich sind und dass der zweite Linearantrieb und der dritte Linearantrieb baugleich sind.

In verschiedenen Ausgestaltungsformen weist das Arbeitsplatzsystem ferner ein Steuerungssystem auf, das eingerichtet ist, den ersten Linearantrieb und den vierten Linearantrieb gemeinsamen, insbesondere mit demselben Steuersignal, anzusteuern und den zweiten Linearantrieb und den dritten Linearantrieb gemeinsam, insbesondere mit demselben Steuersignal anzusteuern. Somit werden die beiden zueinander gehörenden Linearantriebe sozusagen parallel angesteuert, ohne dass eine aufwändige Umsetzung von Steuersignalen notwendig wäre. Auch Maßnahmen wie beispielsweise ein Klemmschutz bei Hindernissen oder dergleichen kann so einfach realisiert werden.

Trotz der im Wesentlichen gemeinsamen Steuerung kann die Teleskopsäule baulich beziehungsweise bauphysikalisch getrennt von dem Tischsystem angeordnet sein.

Die Erfindung wird im Folgenden an mehreren Ausführungsbeispielen anhand der Figuren näher erläutert. Funktions- beziehungsweise wirkungsgleiche Komponenten oder Funktionseinheiten tragen gleiche Bezugszeichen. Insoweit sich Komponenten oder Funktionseinheiten in ihrer Funktion entsprechen, wird deren Beschreibung nicht in jeder der folgenden Figuren wiederholt. Es zeigen:
- Figur 1: eine Ausführungsform einer Teleskopsäule,
- Figur 2: ein Detail einer Ausführungsform einer Teleskopsäule,
- Figur 3A: und 3B eine Ausführungsform eines Standsockels für eine Teleskopsäule,
- Figur 4: eine Ausführungsform eines Arbeitsplatzsystems,
- Figur 5: eine weitere Ausführungsform einer Teleskopsäule,
- Figur 6: eine weitere Ausführungsform eines Arbeitsplatzsystems, und
- Figur 7: eine Ausführungsform einer Antriebssteuerung für ein Arbeitsplatzsystem.

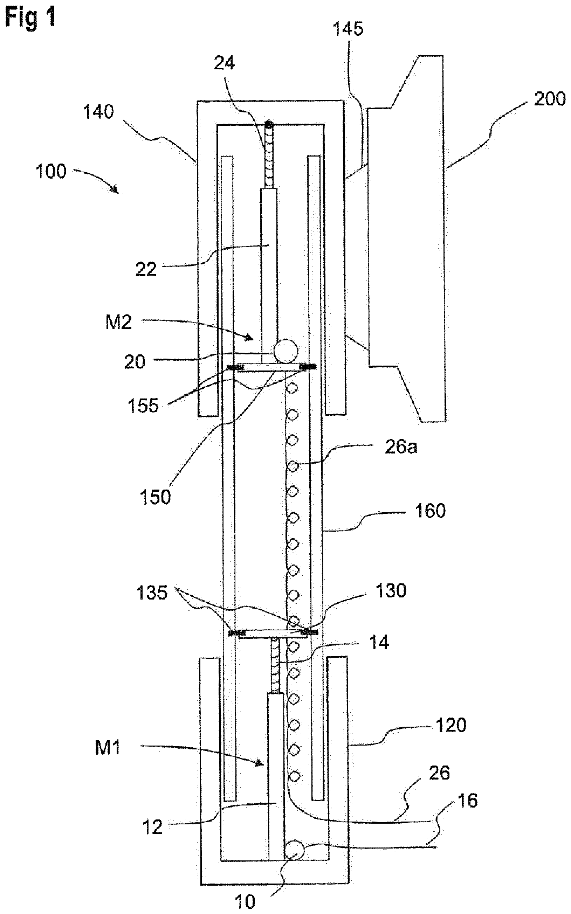

Figur 1 zeigt eine Ausführungsform einer Teleskopsäule 100, an der ein Flachbildschirm 200 befestigt ist. Die Teleskopsäule 100 umfasst einen unteren Rahmen 120, einen oberen Rahmen 140 und ein Säulenrohr 160, das sowohl im unteren Rahmen 120 als auch im oberen Rahmen 140 längsverschiebbar geführt ist. Im Bereich des unteren Rahmens 120 ist ein erster Linearantrieb M1 vorgesehen, welcher fest mit dem unteren Rahmen 120 verbunden ist. Ferner ist der erste Linearantrieb M1 an einer Platte 130 über Verbindungsmittel 135 mit dem Säulenrohr 160 dreh- und ortsfest verbunden. Der erste Linearantrieb M1 ist in der Figur 1 schematisch mit einem Elektromotor 10, einem feststehenden Teil 12 und einer Spindel 14 dargestellt, welche beispielsweise durch eine nicht sichtbare Spindelmutter, die direkt oder indirekt über den Motor 10 angetrieben wird, eine Längsverschiebung in vertikaler Richtung bewirkt.

In ähnlicher Weise ist im oberen Rahmen 140 ein zweiter Linearantrieb M2 angeordnet, welcher über eine Platte 150 und Befestigungsmittel 155 dreh- und ortsfest im Säulenrohr 160 befestigt ist. Ferner ist der zweite Linearantrieb M2 fest mit dem oberen Rahmen 140 verbunden. In der schematischen Darstellung der Figur 1 weist der zweite Linearantrieb M2 einen Motor 20, einen feststehenden Teil 22 und eine Gewindespindel 24 auf. Eine Ansteuerung der Linearantriebe M1, M2 erfolgt für den unteren, ersten Linearantrieb M1 über eine Zuleitung 16 und für den zweiten, oberen Linearantrieb M2 über eine Zuleitung 26.

Um einen sich verändernden Abstand zwischen dem unteren Rahmen 120 und dem oberen Rahmen 140 auszugleichen, weist die Zuleitung 26 zumindest im Inneren des Säulenrohrs 160 einen spiralförmigen Bereich 26a auf, welcher bei gespannter Leitung 26 einen Längenausgleich ermöglicht. Dabei ist es vorteilhaft, wenn sowohl der erste Linearantrieb M1 als auch der zweite Linearantrieb M2 ihren Motor 10 beziehungsweise 20 an der jeweils zum Boden gerichteten Seite des ersten und zweiten Linearantriebs M1, M2 angeordnet haben. Durch die Kabelführung der Zuleitung 26 im Inneren des Säulenrohrs 160 kann auf Durchführungen zum Motor 20 durch das Säulenrohr 160 verzichtet werden. Zudem ergibt sich ein einheitliches Erscheinungsbild mit einer vorzugsweise gemeinsamen Kabelausführung aus dem unteren Rahmen 120.

Am oberen Rahmen 140 ist eine Bildschirmhalterung 145 vorgesehen, über die der Bildschirm 200 an der Teleskopsäule 100 befestigt wird. Die Rahmen 120, 140 und das Säulenrohr 160 weisen einen aufeinander abgestimmten Querschnitt auf. Beispielsweise ist die Querschnittsform eckig gewählt, wodurch die Drehfestigkeit der Anordnung verbessert ist. Der gleiche Effekt lässt sich auch mit abgerundeten, beispielsweise ovalen Formen erreichen. Jedoch kann auch eine kreisrunde Querschnittsform gewählt werden.

Im Betrieb der Teleskopsäule können der erste und der zweite Linearantrieb M1, M2 individuell und insbesondere unabhängig voneinander angesteuert werden. Dadurch lässt sich beispielsweise das Säulenrohr 160 durch Ansteuern des ersten Linearantriebs M1 relativ zum unteren Rahmen 120 bewegen, während durch Ansteuerung des zweiten Linearantriebs M2 der obere Rahmen 140 relativ zum Säulenrohr 160 bewegen. Bei gleichzeitiger Ansteuerung der Linearantriebe M1, M2 kann eine hohe Geschwindigkeit bei der Höhenverstellung des Bildschirms 200 erreicht werden.

Der erste und der zweite Linearantrieb M1, M2 können so ausgewählt sein, dass eine maximale lineare Auslenkung des ersten Linearantriebs M1 kleiner ist als eine maximale lineare Auslenkung des zweiten Linearantriebs M2. Dadurch kann die Krafteinwirkung über Hebeleffekte aufgrund des Gewichts des Bildschirms 200 besser von der mechanischen Konstruktion der Teleskopsäule aufgenommen werden.

Die Rahmen 120, 140 und das Säulenrohr 160 sind vorzugsweise aus einem Metall, insbesondere einem Leichtmetall wie Aluminium, hergestellt. Dies unterstützt die hohe Tragfähigkeit der Teleskopsäule 100 für große und schwere Bildschirme. Beispielsweise können mit einer solchen Konstruktion Bildschirme mit einem Gewicht von mehr als 100 kg getragen werden.

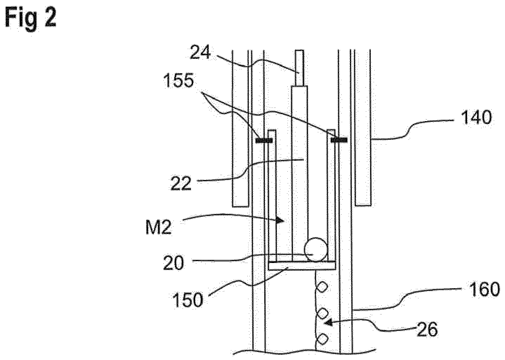

Figur 2 zeigt ein Detail einer Ausführungsform einer Teleskopsäule 100, welche beispielsweise in die Ausführungsform der Figur 1 integriert werden kann. Hierbei ist statt der Platte der Figur 1 eine Halterung 150 vorgesehen, die im Querschnitt U-förmig im Inneren des Säulenrohrs 160 befestigt ist. Am Boden der U-förmigen Halterung 150 ist wiederum der zweite Linearantrieb M2 mit dem Motor 20 befestigt. Die U-förmige Halterung 150 ist über Befestigungsmittel 155 dreh- und ortsfest im Säulenrohr 160 fixiert. Durch das Herabsetzen der Position des Linearantriebs M2 kann eine größere Hublänge erreicht werden. Zudem werden die Befestigungsmittel 155 optisch vom oberen Rahmen 140 verdeckt.

Die Teleskopsäule 100 kann unmittelbar am Boden aufgestellt werden und beispielsweise durch Verschraubung des unteren Rahmens 120 mit dem Boden oder eine andere feste Verbindung fixiert werden.

Alternativ ist es jedoch auch möglich, einen Standsockel vorzusehen, auf den der untere Rahmen 120 befestigt ist. Dies ermöglicht eine flexiblere Art der Aufstellung, da bei entsprechender Gestaltung des Standsockels auf eine Fixierung der Teleskopsäule am Boden verzichtet werden kann. Weiterhin ist es möglich, in dem Standsockel einen Mechanismus vorzusehen, der eine horizontale Verschiebung der Säulenkonstruktion ermöglicht.

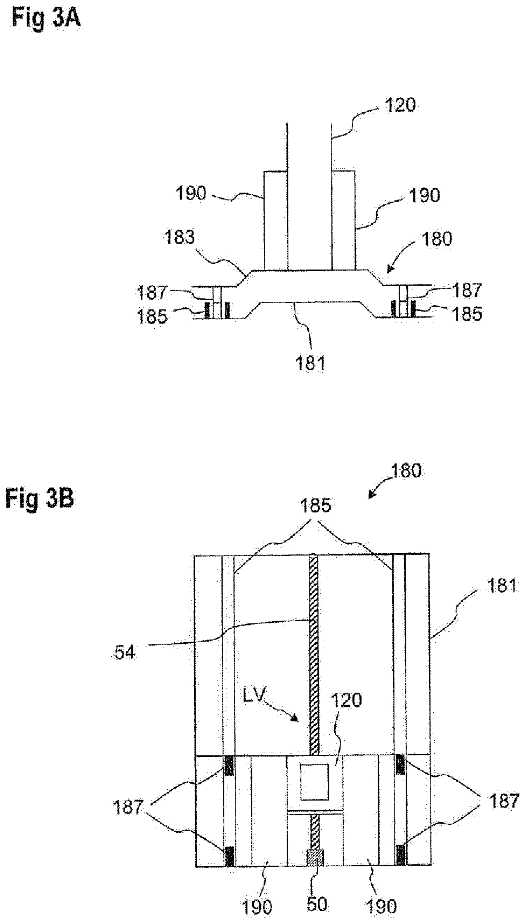

Ein Detail einer Teleskopsäule mit einem solchen Standsockel ist beispielsweise in Figur 3A und Figur 3B dargestellt. Dabei zeigt Figur 3A einen seitlichen Querschnitt einer solchen Teleskopsäule und Figur 3B eine Draufsicht von oben.

Dementsprechend weist die Teleskopsäule 100 einen Standsockel 180 auf, der ein unteres Sockelteil 181 und ein oberes Sockelteil 183 umfasst. Im unteren Sockelteil 181 ist eine schienenartige Konstruktion 185 vorgesehen, in die durch entsprechende Gleitelemente 187 am oberen Sockelteil 183 eingegriffen wird. Am oberen Sockelteil 183 ist der untere Rahmen 120 befestigt und durch seitliche Befestigungen 190 zusätzlich stabilisiert.

Das untere Sockelteil 181 und das obere Sockelteil 183 weisen die gleiche Breite auf. Wie aus Figur 3B ersichtlich ist, ist das untere Sockelteil 181 jedoch länger als das obere Sockelteil 183. Zwischen den beiden Sockelteilen 181, 183 ist ein weiterer Linearantrieb LV vorgesehen, der beispielhaft als spindelbasierter Antrieb mit einem Motor 50 und einer Gewindespindel 54 dargestellt ist. Eine Umsetzung von rotatorischer Bewegung in eine Linearbewegung erfolgt beispielsweise durch eine hier nicht sichtbare Gewindespindel, vorzugsweise aus Kunststoff, die auf die Gewindespindel 54 aufgesetzt ist. Bei Ansteuerung des Linearantriebs LV kann somit das obere Sockelteil 183 in der Schienenkonstruktion 185 längs bewegt werden. Der Abstand zwischen oberem und unterem Sockelteil 183, 181 ist vorzugsweise aus Stabilitätsgründen möglichst gering auszuführen. Insbesondere sei darauf hingewiesen, dass der in Figur 3A gezeigte Abstand lediglich aus Gründen der besseren Übersichtlichkeit übermäßig groß dargestellt ist. Der Linearantrieb LV ist vorzugsweise zwischen den Sockelplatten 181, 183 angeordnet. Die Bauhöhe eines solchen Linearantriebs sollte dementsprechend gering gewählt sein.

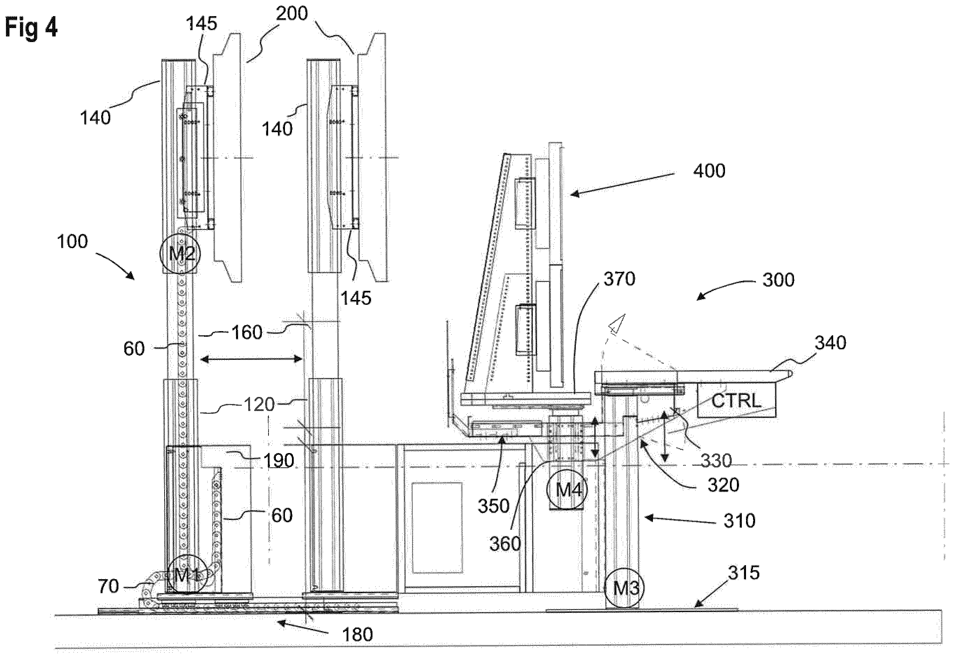

Die Teleskopsäule 100 kann alleine verwendet werden. Zudem eignet sich eine Teleskopsäule gemäß einer der zuvor beschriebenen Ausführungsformen auch in Kombination mit einem Tischsystem zur Bildung eines Arbeitsplatzsystems. Ein solches Arbeitsplatzsystem ist beispielsweise in Figur 4 dargestellt. Das Arbeitsplatzsystem umfasst eine Teleskopsäule 100 mit einem vertikal verschiebbaren Sockel 180. Die Teleskopsäule 100 ist dabei an zwei unterschiedlichen horizontal verschobenen Positionen dargestellt. Im Übrigen wird bezüglich der Elemente der Teleskopsäule 100 auf die zuvor beschriebenen Ausführungsformen verwiesen, um Wiederholungen zu vermeiden.

Das Arbeitsplatzsystem umfasst ferner ein Tischsystem 300 mit einem mehrfach höhenverstellbaren Aufbau. Dazu ist eine Standsäule 310 mit einem Fußelement 315 und einem höhenverstellbaren Teil 320 vorgesehen, welches einen dritten Linearantrieb M3 aufweist. Eine Konsole 330 ist starr mit dem höhenverstellbaren Teil 320 der Standsäule 310 verbunden. An der Konsole 330 ist eine erste Arbeitsplatte 340 befestigt. Starr mit der Konsole ist ein Rückelement 350 verbunden, welches ein höhenverstellbares Hubteil 360 mit einem vierten Linearantrieb M4 aufweist. Der vierte Linearantrieb M4 ist für eine Bewegung relativ zum Rückelement eingerichtet und dient zum Verstellen einer zweiten Arbeitsplatte 370, die auf dem Hubteil 360 befestigt ist. Auf der zweiten Arbeitsplatte 370 sind beispielsweise weitere Flachbildschirme 400 aufgestellt beziehungsweise befestigt.

Die Linearantriebe M1, M2, M3, M4 sind in der Darstellung der Figur 4 lediglich symbolisch dargestellt, um eine einfache Darstellung zu ermöglichen. Wie der erste und der zweite Linearantrieb M1, M2 sind auch der dritte und der vierte Linearantrieb M3, M4 beispielsweise als spindelbasierte Antriebe ausgeführt, welche eine rotatorische Bewegung eines Motors in eine translatorische Höhenbewegung umsetzen. Dabei dient der dritte Linearantrieb M3 zur Höhenverstellung der Konsole 330 gemeinsam mit dem Rückelement 350 und den jeweils verbundenen Arbeitsplatten 340, 370. Der vierte Linearantrieb M4 dient lediglich zur Höhenverstellung der zweiten Arbeitsplatte 370 und der darauf befindlichen Bildschirme 400.

Bei der links dargestellten Position der Teleskopsäule 100 sind zusätzlich zwei so genannte Kabelraupen 60, 70 dargestellt, welche einer sicheren Kabelführung der Kabel für den Bildschirm 200 beziehungsweise für die Linearantriebe M1, M2 dienen. Dabei befindet sich die Teleskopsäule 100 in eingefahrenem Zustand, bei dem die Kabelraupe 60 für die Bildschirmkabel eingefahren ist und gewünschtermaßen teilweise durchhängt. Das Kabel ist dabei sicher innerhalb der Kabelraupe 60 geführt und kann sich nicht mit anderen Bauteilen der Teleskopsäule verklemmen oder dergleichen. Die Kabelraupe 60 ist vorzugsweise seitlich der Teleskopkonstruktion aus den Rahmen 120, 140 und dem Säulenrohr 160 geführt. Die weitere Kabelraupe 70 dient der sicheren Kabelführung für die Antriebskabel bei einer Horizontalbewegung mit dem Standsockel 180.

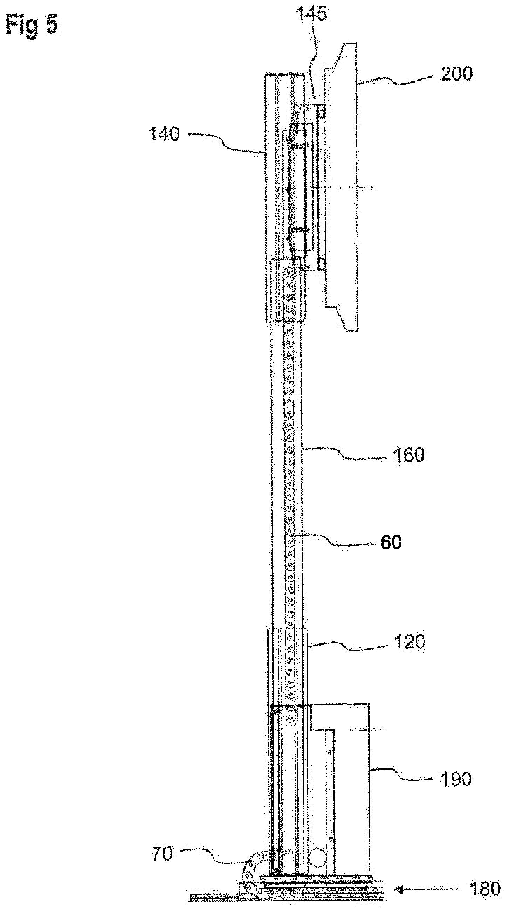

Mit Verweis auf Figur 5 ist dort die Teleskopsäule 100 in ausgefahrenem Zustand dargestellt, bei dem die Kabelraupe 60 nahezu geradlinig ausgezogen ist. Durch die Kabelraupen kann auch ein unerwünschtes Abknicken der Kabel verhindert werden. Die Kabelraupen sind ähnlich dem Prinzip von Ketten von Kettenfahrzeugen aufgebaut, insbesondere bezüglich der Verbindung der einzelnen Raupenelemente untereinander.

Mit Verweis zurück auf Figur 4 weisen der erste Linearantrieb M1 und der vierte Linearantrieb M4 gleiche oder im Wesentlichen gleiche Spezifikationen auf. Ebenso weisen auch der zweite Linearantrieb M2 und der dritte Linearantrieb M3 gleiche oder im Wesentlichen gleiche Spezifikationen auf. Am Tischsystem 300 ist zudem ein Steuerungssystem CTRL befestigt, welches die Linearantriebe M1, M2, M3, M4 ansteuert. Die gleichen Spezifikationen der Linearantriebe äußern sich beispielsweise derart, dass der erste Linearantrieb M1 und der vierte Linearantrieb M4 bei Beaufschlagung mit demselben Steuersignal durch das Steuerungssystem eine gleiche Höhenverstellung bewirken. Ebenso bewirken der zweite Linearantrieb M2 und der dritte Linearantrieb M3 bei Beaufschlagung mit demselben Steuersignal durch das Steuerungssystem CTRL eine gleiche Höhenverstellung. Beispielsweise sind der erste und der vierte Linearantrieb M1, M4 baugleich, und der zweite und dritte Linearantrieb M2, M3 sind ebenfalls zueinander baugleich.

Wenn also das Steuerungssystem CTRL den dritten Linearantrieb M3 zur Höhenverstellung des Tischsystems 300 und parallel dazu den zweiten Linearantrieb M2 ansteuert, fahren sowohl das komplette Tischsystem beziehungsweise die erste und zweite Arbeitsplatte 340, 370 um den gleichen Höhenunterschied nach oben beziehungsweise nach unten wie der Bildschirm 200 beziehungsweise der obere Rahmen 140 im Vergleich zum Säulenrohr 160. Somit kann mit geringem Aufwand eine synchrone Höhenverstellung zwischen Tischsystem und Teleskopsäule erreicht werden. Der gleiche Effekt tritt durch die parallele Ansteuerung des vierten Linearantriebs M4 und des ersten Linearantriebs M1 auf. Somit wird also bei jeder Höhenverstellung am Tischsystem 300 auch der Bildschirm 200 an der Teleskopsäule 100 um die gleiche Höhendifferenz verändert.

Die synchrone Höhenverstellung ermöglicht eine verbesserte Arbeitsplatzergonomie. Zudem ist ein Bediener des Arbeitsplatzsystems von der Aufgabe der getrennten Verstellung der einzelnen Elemente befreit und kann somit eine Höhenverstellung ausführen, ohne sich Gedanken über die Synchronisierung machen zu müssen. Dementsprechend kann er sich auch besser auf seine eigentlichen Aufgaben an dem Arbeitsplatzsystem konzentrieren.

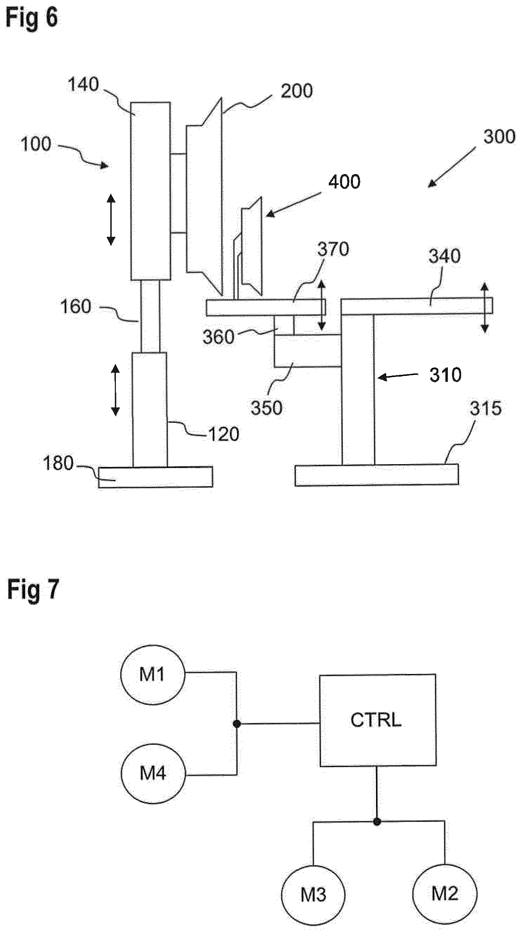

Figur 6 zeigt ein weiteres Ausführungsbeispiel eines Arbeitsplatzsystems, welches im Wesentlichen auf den zu Figur 5 beschriebenen Elementen basiert. Dabei ist die Teleskopsäule 100 beziehungsweise der daran befestigte Bildschirm 200 so angeordnet, dass dessen Unterkante nur einen geringen Abstand, beispielsweise 1 bis 2 cm zur Oberseite der zweiten Arbeitsplatte 370 aufweist. Der oder die Bildschirme 400 sind dabei beispielsweise seitlich vom Bildschirm 200 angeordnet, sodass ein Benutzer des Arbeitsplatzsystems vollen Blick auf sämtliche Bildschirme 200, 400 hat. Durch die synchrone Höhenverstellung bleibt dabei der Abstand zwischen dem Bildschirm 200 und der Arbeitsplatte 370 konstant.

Eine Teleskopsäule 100 gemäß einer der beschriebenen Ausführungsformen lässt sich auch mit einem bestehenden Tischsystem kombinieren, um den gewünschten synchronen Höhenverstellungsmechanismus zu erreichen. Dazu kann beispielsweise die Teleskopsäule 100 mit Linearantrieben M1, M2 ausgestattet werden, die in ihren Spezifikationen den bestehenden Linearantrieben M3, M4 des Tischsystems entsprechen. Sollte dies nicht ohne Weiteres möglich sein, können beispielsweise auch die Linearantriebe M3, M4 des Tischsystems ausgetauscht werden und insbesondere durch entsprechend baugleiche Linearantriebe zur Teleskopsäule 100 ersetzt werden. Vorteilhaft bei einem nachgerüsteten aber auch bei einem ursprünglich derart hergestellten Arbeitsplatzsystem ist es, wenn die paarweise parallel betriebenen Linearantriebe M1, M4 beziehungsweise M2, M3 mit den gleichen Steuerungssignalen ansteuerbar sind beziehungsweise auch gleiche Sensorsignale beispielsweise zur Positionserkennung oder zum Quetschschutz liefern. Dementsprechend kann unmittelbar mit einer Steuerung ohne zusätzliche Schaltungen für Signalumsetzungen gearbeitet werden.

Figur 7 zeigt ein beispielhaftes Blockschaltbild für ein Steuerungssystem CTRL, an das die Linearantriebe M1, M2, M3, M4 angeschlossen sind. Insbesondere werden dabei der erste und der vierte Linearantrieb M1, M4 gemeinsam und der zweite und der dritte Linearantrieb M2, M3 gemeinsam angesteuert.

In verschiedenen Ausführungsformen kann das Steuerungssystem CTRL jedoch auch eingerichtet sein, beispielsweise in einer Kalibrierungsphase die einzelnen Linearantriebe getrennt voneinander anzusteuern, um eine initiale Einstellung, insbesondere Positionierung des Bildschirms 200 bezüglich der Arbeitsplatten zu erreichen. Die synchrone Verstellung erfolgt dann im Normalbetrieb oder regulären Betrieb. Teleskopsäulen der beschriebenen Art und/oder Arbeitsplatzsysteme der beschriebenen Art lassen sich beispielsweise in Kontrollzentren oder Leitständen oder dergleichen einsetzen, bei denen die Visualisierung über entsprechende Bildschirme notwendig ist. Insbesondere bei solchen Arbeitsplätzen ist es für den Benutzer oder Bediener üblicherweise von Bedeutung, Einstellung so unkompliziert wie möglich vornehmen zu können und gleichzeitig eine hohe Konzentration aufrechtzuerhalten.

## Patentansprüche

1. Teleskopsäule (100) zur elektrischen Höhenverstellung eines Flachbildschirms (200), die Teleskopsäule (100) umfassend
- einen unteren Rahmen (120);
- einen oberen Rahmen (140), der Befestigungsmittel für einen Flachbildschirm (200) aufweist;
- ein Säulenrohr (160), das innerhalb des unteren Rahmens (120) und des oberen Rahmens (140) längsverschiebbar geführt ist;
- einen ersten Linearantrieb (M1), der zwischen dem unteren Rahmen (120) und dem Säulenrohr (160) befestigt ist und eingerichtet ist, das Säulenrohr relativ zum unteren Rahmen (120) insbesondere vertikal zu bewegen; und
- einen zweiten Linearantrieb (M2), der zwischen dem oberen Rahmen (140) und dem Säulenrohr (160) befestigt ist und eingerichtet ist, den oberen Rahmen (140) relativ zum Säulenrohr insbesondere vertikal zu bewegen;
wobei sich der erste und der zweite Linearantrieb (M1, M2) individuell und unabhängig voneinander ansteuern lassen.

2. Teleskopsäule (100) nach Anspruch 1,
bei der eine maximale lineare Auslenkung des ersten Linearantriebs (M1) kleiner ist als eine maximale lineare Auslenkung des zweiten Linearantriebs (M2).

3. Teleskopsäule (100) nach Anspruch 1 oder 2,
bei der ein jeweiliger Motor (10, 20) des ersten und des zweiten Linearantriebs (M1, M2) an der jeweils zum Boden gerichteten Seite des ersten und des zweiten Linearantriebs (M1, M2) angeordnet ist.

4. Teleskopsäule (100) nach einem der Ansprüche 1 bis 3,
bei der das Säulenrohr (160) im Inneren Mittel (26a) zur Kabelführung für Kabel des zweiten Linearantriebs (M2) aufweist, welche eingerichtet sind, einen sich verändernden Abstand zwischen dem unteren Rahmen (120) und dem oberen Rahmen (140) auszugleichen.

5. Teleskopsäule (100) nach einem der Ansprüche 1 bis 4,
bei der das Säulenrohr (160) Mittel (60) zur Kabelführung für Kabel des Flachbildschirms (200) aufweist, welche eingerichtet sind, einen sich verändernden Abstand zwischen dem unteren Rahmen (120) und dem oberen Rahmen (140) auszugleichen.

6. Teleskopsäule (100) nach einem der Ansprüche 1 bis 5,
bei der der untere Rahmen (120) auf einem Standsockel (180) befestigt ist.

7. Teleskopsäule (100) nach Anspruch 6,
ferner aufweisend wenigstens eine seitliche Befestigung (190), die am unteren Rahmen (120) starr befestigt und starr mit dem Standsockel (180) verbunden ist.

8. Teleskopsäule (100) nach Anspruch 6 oder 7,
bei der der Standsockel () einen weiteren Linearantrieb (LV) zur horizontalen Verschiebung des unteren Rahmens (120) aufweist.

9. Höhenverstellbares Arbeitsplatzsystem mit einer Teleskopsäule (100) nach einem der vorhergehenden Ansprüche und mit einem Tischsystem (300), das Tischsystem (300) umfassend
- wenigstens eine Standsäule (310) mit einem Fußelement (315) und einem höhenverstellbaren Teil (320), das einen dritten Linearantrieb (M3) aufweist;
- eine Konsole (330), die starr mit dem höhenverstellbaren Teil (320) der Standsäule (310) verbunden und an der eine erste Arbeitsplatte (340) befestigt ist; und
- ein Rückelement (350), das starr mit der Konsole (330) verbunden ist und das ein höhenverstellbares Hubteil (360) mit einem vierten Linearantrieb (M4) aufweist, der für eine Bewegung relativ zum Rückelement (350) eingerichtet ist, wobei an dem Hubteil (360) eine zweite Arbeitsplatte (370) befestigt ist; wobei
- der erste Linearantrieb (M1) und der vierte Linearantrieb (M4) gleiche oder im Wesentlichen gleiche Spezifikationen aufweisen; und
- der zweite Linearantrieb (M2) und der dritte Linearantrieb (M3) gleiche oder im Wesentlichen gleiche Spezifikationen aufweisen.

10. Arbeitsplatzsystem nach Anspruch 9,
bei dem der erste Linearantrieb (M1) und der vierte Linearantrieb (M4) bei Beaufschlagung mit dem selben Steuersignal eine gleiche Höhenverstellung bewirken, und bei dem der zweite Linearantrieb (M2) und der dritte Linearantrieb (M3) bei Beaufschlagung mit dem selben Steuersignal eine gleiche Höhenverstellung bewirken.

11. Arbeitsplatzsystem nach Anspruch 9 oder 10,
bei dem der erste Linearantrieb (M1) und der vierte Linearantrieb (M4) baugleich sind, und bei dem der zweite Linearantrieb (M2) und der dritte Linearantrieb (M3) baugleich sind.

12. Arbeitsplatzsystem nach einem der Ansprüche 9 bis 11, ferner aufweisend ein Steuerungssystem (CTRL), das eingerichtet ist, den ersten Linearantrieb (M1) und den vierten Linearantrieb (M4) gemeinsam, insbesondere mit dem selben Steuersignal, anzusteuern, und den zweiten Linearantrieb (M2) und den dritten Linearantrieb (M3) gemeinsam, insbesondere mit dem selben Steuersignal, anzusteuern.

13. Arbeitsplatzsystem nach einem der Ansprüche 9 bis 12,
bei dem die Teleskopsäule (100) baulich getrennt von dem Tischsystem (300) angeordnet ist.

## Claims

1. Telescopic column (100) for electrical height adjusment of a flat screen (200), the telescopic column comprising
- a lower frame (120);
- an upper frame (140), comprising a fastening device for a flat screen (200);
- a column tube (160), which is conducted longitudinally slidably within the lower frame (120) and the upper frame (140) ;
- a first linear drive (M1) which is mounted between the lower frame (120) and the column tube (160) and is configured to move the column tube relatively to the lower frame (120), especially vertically; and
- a second linear drive (M2), which is mounted between the upper frame (140) and the column tube (160) and is configured to move the upper frame (140) relatively to the column tube, especially vertically;
wherein the first and the second linear drive (M1, M2) can be driven individually and independently of each other.

2. Telescopic column (100) according to claim 1,
where a maximum linear deflection of the first linear drive (M1) is smaller than a maximum linear deflection of the second linear drive (M2).

3. Telescopic column (100) according to claim 1 or 2,
where a respective engine (10, 20) of the first and the second linear drive (M1, M2) is arranged on the first and second linear drive (M1, M2) each on the side facing the ground.

4. Telescopic column (100) according to one of claims 1 to 3, where the column tube (160) in the interior has means (26a) for cable management for cables of the second linear drive (M2), which are configured to compensate a changing distance between the lower frame (120) and the upper frame (140).

5. Telescopic column (100) according to one of claims 1 to 4, where the column tube (160) has means (60) for cable management for cables of the flat screen (200), which are configured to compensate a changing distance between the lower frame (120) and the upper frame (140).

6. Telescopic column (100) according to one of claims 1 to 5, where the lower frame (120) is fixed on a stand base (180).

7. Telescopic column (100) according to claim 6,
further comprising at least one lateral attachment (190), which is rigidly attached to the lower frame and rigidly connected to the stand base (180).

8. Telescopic column (100) according to claim 6 or 7,
where the stand base () has a further linear drive (LV) for horizontal displacement oft he lower frame (120).

9. Height-adjustable workplace system with a telescopic column (100) according to one of the previous claims and with a table system (300), the table system comprising
- at least one stand column (310) with one foot element (315) and one height adjustable part (320), which has a third linear drive (M3);
- a console (330), which is rigidly connected to the height-adjustable part of the stand column (310) and where a first worktop is fixed to; and
- a back element (350), which is rigidly fixed to the console (330) and has a height adjustable lifting part (360) with a fourth linear drive (M4), which is configured for a movement relative to the back element (350), in which to the lfiting part (360) there is attached a second worktop (370); in which
- the first linear drive (M1) and the fourth linear drive (M4) have same or essentially same specifications; and
- the second linear drive (M2) and the third linear drive (M3) have same or essentially same specifications.

10. Workplace system according to claim 9,
where the first linear drive (M1) and the fourth linear drive (M4) when applying the same control signal cause the same height adjustment, and where the second linear drive (M2) and the third linear drive (M3) when applying the same control signal cause the same height adjustment.

11. Workplace system according to claim 9 or 10
Where the first linear drive (M1) and the fourth linear drive (M4) are identical, and where the second linear drive (M2) and the third linear drive (M3) are identical.

12. Workplace system according to one of claims 9 to 11, further comprising a conrol system (CTRL), which is configured to drive the first linear drive (M1) and the fourth linear drive (M4) together, especially with the same control signal, and to drive the second linear drive (M2) and the third linear drive (M3) together, especially with the same control signal.

13. Workplace system according to one of the claims 9 to 12, where the telescop column (100) is structurally separate from the table system (300).

## Revendications

1. Colonne télescopique (100) pour le réglage électrique de la hauteur d'un écran plat (200), la colonne Télescopique comprenant
- un cadre inférieur (120);
- un cadre supérieur (140), qui a un moyen de fixation pour en écran plat (200);
- un tube de colonne (160), qui est guidé longitudinalement déplaçable dans le cadre inférieur et le cadre supérieur;
- un premier entraînement linéaire (M1), qui est fixé entre le cadre inférieur (120) et le tube de colonne (160) et est adapté pour déplacer le tube de colonne relativement au cadre inférieur (120), en particulier verticalement; et
- un second entraînement linéaire (M2), que est est fixé entre le cadre supérieur (140) et le tube de colonne (160) et est adapté pour déplacer le cadre supérieur (140) relativement au tube de colonne (160) en particulier verticalement;
avec le premier et seconde entraînement linéaire (M1, M2) contrôlés individuellement et indépendamment.

2. Colonne télescopique (100) selon la revendication 1,
où un déplacement linéaire maximal du premier entraînement linéaire (M1) est inférieur au déplacement linéaire maximal du second entraînement linéaire (M2).

3. Colonne télescopique (100) selon la revendication 1 ou 2, oú un motor respectif (10,20) du premier et du second entraînement linéaire (M1, M2) est disposé au chaque côte dirigé vers le sol du premier et du second entraînement linéaire (M1, M2).

4. Colonne télescopique (100) selon une des revendications 1 à 3,
oú le tube de colonne (160) à l'intérieur a des moyens (26a) de gestion des câbles pour les cables du second entraînement linéaire (M2), qui sont adapté de compenser une distance changeante entre le cadre inférieur (120) et le cadre supérieur (140).

5. Colonne télescopique (100) selon une des revendications 1 à 4,
oú le tube de colonne (160) a des moyens (60) de gestion des câbles pour les calbes de l'écran plat (200), qui sont adapté, de compenser une distance changeante entre le cadre inférieur (120) et le cadre supérieur (140).

6. Colonne télescopique (100) selon une des revendications 1 à 5,
oú le cadre inférieur (120) est fixé sur un piédestal (180).

7. Colonne télescopique (100) selon la revendication 6, ayant également une attache latérale (190), qui est rigidement attaché au cadre inférieur (120) et connecté avec le piédestal (180).

8. Colonne télescopique (100) selon la revendication 6 ou 7, oú le piédestal () a un autre entraînement linéaire (LV) pour le déplacement horizontal du cadre inférieur (120).

9. Système de lieu de travail réglable en hauteur avec une colonne télescopique (100) selon une des revendications précédentes et avec un système de table (300), le système de table (300) comprenant
- au moins un pilier (310) avec un élément de pied (315) et avec une partie réglable en hauteur (320), qui a un troisième entraînement linéaire (M3);
- une console (330), qui est rigidement connecté avec la partie réglable en hauteur (320) du pilier (310) et à laquelle un premier panneau de travail (340) est attaché ; et
- un élément arrière (350), qui est rigidement connecté avec la console (330) et qui a une partie de levage réglable en hauteur (360) avec un quatrième entraînement linéaire (M4) qui est adapté pour un mouvement par rapport à l'élément arrière (350), dans lequel un second panneau de travail (370) est fixé à la partie réglable en hauteur; dans lequel
- le premier entraînement linéaire (M1) et le quatrième entraînement linéaire (M4) ont les mêmes ou sensiblement les mêmes spécifications; et
- le second entraînement linéaire (M2) et le troisième entraînement linéaire (M3) ont les mêmes ou sensiblement les mêmes spécifications.

10. Système de lieu de travail selon la revendication 9,
oú le premier entraînement linéaire (M1) et le quatrième entraînement linéaire (M4) lors de l'application du même signal de contrôle provoquent un réglage de hauteur égal, et oú le second entraînement linéaire (M2) et le troisième entraînement linéaire (M3) lors de l'application du même signal de contrôle provoquent un réglage de hauteur égal.

11. Système de lieu de travail selon la revendication 9 ou 10,
oú le premier entraînement linéaire (M1) et le quatrième entraînement linéaire (M4) sont identique, et oú le second entraînement linéaire (M2) et le troisième entraînement linéaire (M3) sont identique.

12. Système de lieu de travail selon une des revendications 9 à 11,
de plus comprenant un système de contrôle (CTRL), qui est adapté pour contrôler le premier entraînement linéaire (M1) et le quatrième entraînement linéaire (M4) ensemble, en particulier avec le même signal de contrôle, et pour contrôler le second entraînement linéaire (M2) et le troisième entraînement linéaire (M3) ensemble, en particulier avec le même signal de contrôle.

13. Système de lieu de travail selon l'une des revendications 9 à 12,
dans lequel la colonne télescopique (100) est structurellement séparée du système de table (300).
